(19) Europäisches Patentamt
European Patent Office
Office européen des brevets

(11) **EP 2 257 821 B1**

(12) **EUROPEAN PATENT SPECIFICATION**

(45) Date of publication and mention
of the grant of the patent:
**24.10.2012 Bulletin 2012/43**

(51) Int Cl.:
*G01P 3/483* (2006.01)    *G01P 15/125* (2006.01)
*G01P 15/18* (2006.01)    *G01D 5/241* (2006.01)

(21) Application number: **08732855.5**

(22) Date of filing: **26.03.2008**

(86) International application number:
**PCT/US2008/058263**

(87) International publication number:
**WO 2009/120193 (01.10.2009 Gazette 2009/40)**

(54) **CAPACITIVE SENSOR HAVING CYCLIC AND ABSOLUTE ELECTRODE SETS**

KAPAZITIVER SENSOR MIT ZYKLISCHEN UND ABSOLUTEN ELEKTRODENSÄTZEN

CAPTEUR CAPACITIF COMPORTANT DES ENSEMBLES D ÉLECTRODES CYCLIQUES ET ABSOLUES

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**08.12.2010 Bulletin 2010/49**

(73) Proprietor: **Hewlett-Packard Development Company, L.P.**
**Houston, TX 77070 (US)**

(72) Inventors:
• **HARTWELL, Peter George**
**Palo Alto, CA 94304 (US)**
• **WALMSLEY, Robert G**
**Palo Alto, CA 94304-1100 (US)**

(74) Representative: **Zimmermann, Tankred Klaus**
**Schoppe, Zimmermann, Stöckeler**
**Zinkler & Partner**
**P.O. Box 246**
**82043 Pullach (DE)**

(56) References cited:
**US-A- 5 304 937     US-A- 5 447 067**
**US-A- 5 534 859     US-A- 5 834 646**
**US-A- 6 041 653     US-A1- 2004 104 735**
**US-B1- 6 293 150**

**Description**

BACKGROUND

In the field of electronic measurement devices, it is often desirable to determine when an apparatus is physically moved or accelerated by an external force. It can also be desirable to determine the magnitude and direction of such force. To make these sorts of measurements, motion or acceleration sensing devices can be positioned on or included within an apparatus. In particular, MEMS-type sensors have been developed for inclusion in microelectronic circuits, allowing very small and accurate motion sensors to be made very economically.

MEMS devices are a combination of micro-mechanical and microelectronic systems. A MEMS device typically comprises a movable micro-mechanical structure and silicon based micro-electronics that are fabricated using the same types of fabrication processes that are used for integrated circuits. One type of known MEMS sensor is a capacitive MEMS transducer. Such transducers are used in a variety of applications, such as in automotive air-bag systems. The mechanical structure in this type of transducer comprises a capacitive plate or electrode, which is attached to a proof mass and suspended adjacent to another capacitive plate or electrode. As the proof mass moves, a change in capacitance is caused by the displacement of the suspended capacitive electrodes. This change in capacitance is detected by the microelectronics and indicates a magnitude of acceleration. MEMS-type sensors have been developed for detecting motion in one, two and even three dimensions.

It has been found that performance is improved with a fine pitch, cyclic surface electrode array for a lateral-type MEMS sensor. However, for devices with a large dynamic range, the proof mass may travel beyond one pitch of the electrode array, resulting in a loss of positional determinancy, if based only on the array sensor capacitance. This can make it difficult to determine displacement based only upon the capacitance change.

US 6,041,653 A describes an acceleration sensor including a fixed substrate, a fixed electrode mounted on the fixed substrate, a movable body, supported by the fixed substrate and displaced in response to an applied acceleration, a movable electrode which is arranged in the movable body in such a manner that the movable electrode faces the fixed electrode to form, together with the fixed electrode, a capacitor, wherein the movable electrode is mounted between grooves formed in the movable body. The acceleration sensor features improved mechanical strength, compact design and improved sensing accuracy while permitting the manufacturing process to be simplified.

US 5,534,859 A describes a capacitance sensor which comprises a linear or curvilinear array of electrodes connected to means generating on these electrodes a spatially periodic electric potential pattern shifting by increments along said array. Electrodes are disconnected in turn to act as momentarily receiving electrodes, also according to a spatially periodic pattern, shifting by the same increments. Both patterns shift alternately, i.e. the shifts of one pattern taking place between the shifts of the other. A linear or curvilinear scale, with a periodic pattern of electrodes or dielectric or conducting relief, facing the sensor, will thus create a periodic fluctuation of the signal coupled on the momentarily receiving electrodes. The relative position between scale and sensor may then be accurately determined by evaluating the phase, after demodulation, of said signal. As the sensor may be integrated on a semiconductor die and the scale may be very narrow, extreme miniaturization and low cost is given.

US 5,304,937 A describes a capacitive position sensor has a scale, having hollow or raised topographical features, and a cursor having an electrode array comprising at least two transmitting electrodes and at least one receiving electrode separated by shielding electrodes. The coupling capacitances between transmitting and receiving cursor electrodes are modified as a function of the position of the scale topographic feature relative to the cursor, the evaluation of the variation of the signals picked up by the receiving electrode permitting a precise measurement of the relative displacement between scale and cursor.

SUMMARY OF THE INVENTION

It is an object of the invention to provide an improved capacitive sensor.

This object is achieved by a sensor in accordance with claim 1.

BRIEF DESCRIPTION OF THE DRAWINGS

Various features and advantages of the present disclosure will be apparent from the detailed description which follows, taken in conjunction with the accompanying drawings, which together illustrate, by way of example, features of the present disclosure, and wherein:

FIG. 1 is a side, cross-sectional view of a sensor having a pair of capacitor electrodes with variable overlap;

FIG. 2 is a perspective view of a motion sensor having a dynamic capacitor electrode mounted on a moveable proof mass and partially overlapping a static electrode mounted on a stationary support;

FIG. 3 is a perspective view of a motion sensor having multiple dynamic capacitor electrodes mounted on a proof mass and partially overlapping multiple static electrodes;

FIG. 4 is a cross-sectional view of one embodiment of a mems-type capacitive sensor;

FIG. 5 is a plan view showing cyclic electrode arrays in one embodiment of a two-dimensional mems-type capacitive sensor;

FIG. 6 is a perspective view of one embodiment of a capacitive sensor system having multiple electrode sets arranged to sense motion in a single axis;

FIG. 7 is a plan view of another embodiment of a capacitive sensor system having an absolute electrode set and a cyclic electrode set arranged to sense motion in a single axis;

FIG. 8 is a graph of capacitance as a function of displacement, showing the respective capacitance values for a cyclic electrode set and an absolute electrode set;

FIG. 9 is a plan view of another embodiment of a capacitive sensor system having one absolute electrode set and two cyclic electrode sets arranged to sense motion in a single axis;

FIG. 10A is a cross-sectional view of one embodiment of stationary and proof mass portions of a capacitive motion sensor having a cyclic electrode set with electrodes substantially aligned in a home position;

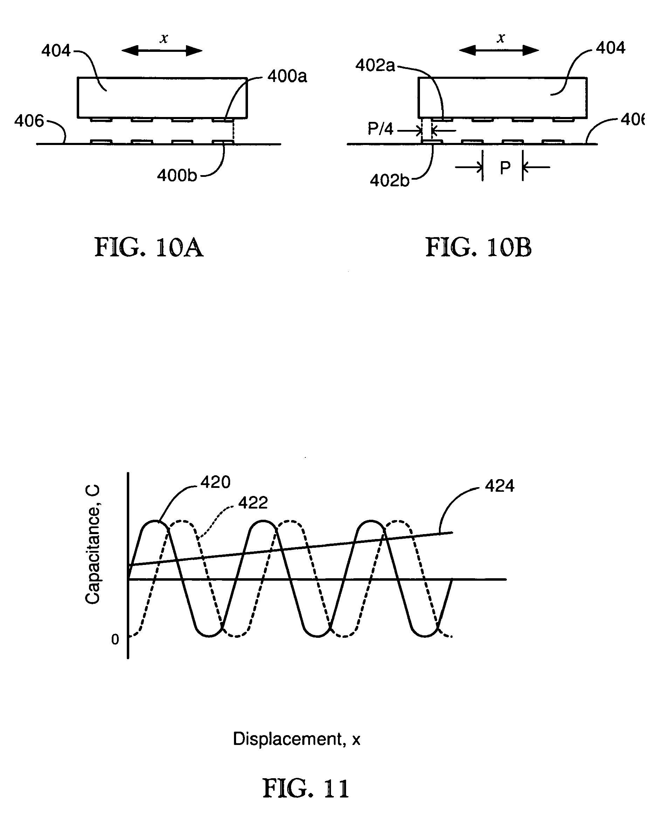

FIG. 10A is a cross-sectional view of one embodiment of stationary and proof mass portions of a capacitive motion sensor having a cyclic electrode set with electrodes offset approximately 90° in a home position;

FIG. 11 is a graph of capacitance as a function of displacement, showing the respective capacitance values for two cyclic electrode sets that are offset by 90°, and an absolute electrode set; and

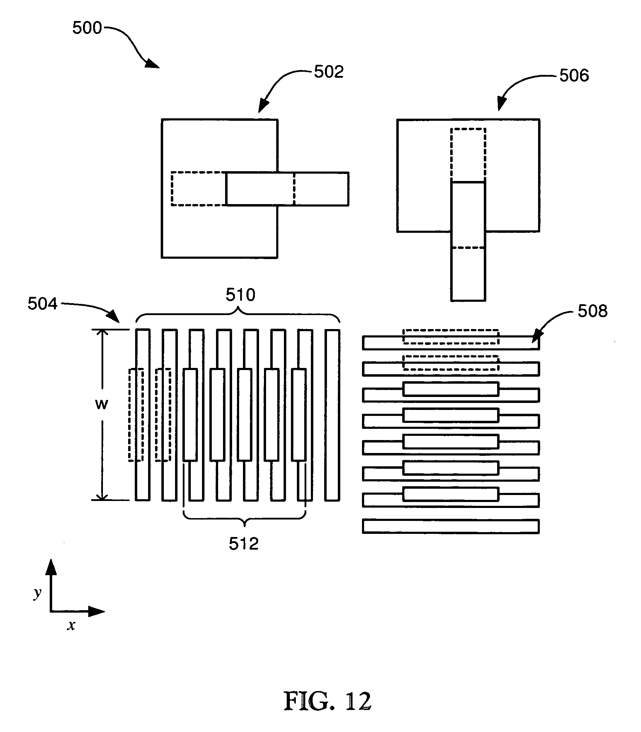

FIG. 12 is a plan view of an embodiment of a capacitive sensor system having an absolute electrode set and a cyclic electrode set arranged to sense motion in each of two axes.

DETAILED DESCRIPTION

Reference will now be made to exemplary embodiments illustrated in the drawings, and specific language will be used herein to describe the same. It will nevertheless be understood that no limitation of the scope of the present disclosure is thereby intended. Alterations and further modifications of the features illustrated herein, and additional applications of the principles illustrated herein, which would occur to one skilled in the relevant art and having possession of this disclosure, are to be considered within the scope of this disclosure.

As noted above, capacitive MEMS transducers have been developed and are used in a variety of applications. These sensors typically include one or more pairs of capacitive electrodes, which produce a change in capacitance as a proof mass moves. MEMS-type sensors have been developed for detecting acceleration and motion in one, two and even three dimensions.

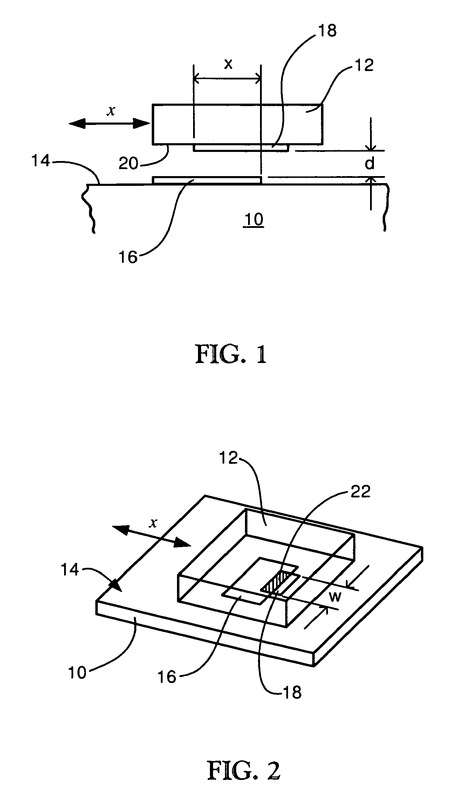

One example of a variable capacitance sensor is shown in FIGs. 1 and 2. Rather than employing a changing capacitor plate gap, which can limit the dynamic range of the device, this sensor employs a variable capacitor plate overlap to detect motion. This sensor includes a fixed substrate 10 and a proof mass 12 that is moveable along an axis, designated as the x axis, in a direction that is substantially parallel to the top surface 14 of the substrate. The substrate and the proof mass can be silicon wafers that are fabricated using integrated circuit fabrication techniques. FIG. 1 is a partial cross-sectional view, while FIG. 2 is a perspective view with the proof mass shown as if it were transparent, in order to show the relative positions of the electrodes. The proof mass has a home position (i.e. a position at which it is at rest when no force is applied to it), and can move in either direction along its axis of motion, depending upon the direction of force that is applied to the structure upon which the sensor is mounted.

This type of sensor can be fabricated using wafer bonding techniques that enable the use of surface electrodes. A fixed surface electrode 16 is attached to the top surface 14 of the substrate 10, and a moving surface electrode 18 is attached to the bottom surface 20 of the proof mass 12. The proof mass and substrate can be of silicon material, and can include circuitry (not shown) for interconnecting the electrodes of the substrate and proof mass to circuitry (not shown) for receiving and interpreting signals from the sensor.

The two surface electrodes 16, 18 are separated by a gap d, and operate as capacitor plates of a variable capacitor. As shown in FIG. 2, the moving electrode has a width w (measured perpendicular to the axis of motion). Depending upon the position of the proof mass 12, some portion of the variable electrode will be positioned directly over the fixed electrode. In FIG. 1, the variable electrode overlaps the fixed electrode by a distance x. The two electrodes thus have an overlap area A that is equal to:

$$A = wx \hspace{4cm} (1)$$

This overlap area is indicated by the cross-hatched area 22 in FIG. 2. With the capacitor plates in this arrangement, the sensor provides a variable capacitance that is proportional to area of overlap A of the electrodes. The capacitance, C, is appoximated by the equation:

$$C \approx (eA)/d \qquad\qquad\qquad (2)$$

where e is the dielectric constant of the material in the gap, d is the dimension of the gap between the electrodes, and A is the area of overlap of the plates. Since motion of the proof mass is in a direction that is perpendicular to the gap, the gap d will be fixed, and the capacitance will change in proportion to the overlap A of the surface electrodes, rather than a change in gap distance.

It is to be appreciated that the dynamic range of this sensor is limited by the length of the electrodes in the x direction. For this reason, electrode plates are typically made to be long enough so that travel in the positive or negative x direction, in response to an external force, will never cause the plates to overlap completely, or not overlap at all. Any range of motion in which there is complete overlap or no overlap will result in a capacitance that does not change with motion.

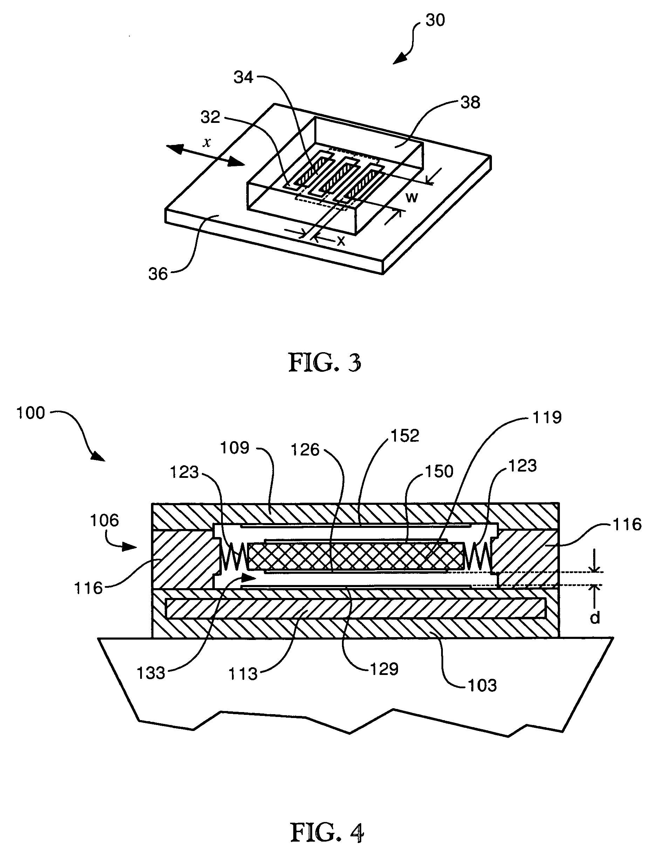

To improve the sensitivity of this type of sensor, a large capacitance change relative to a small motion (displacement) is desired. That is, it is desirable that the change in A be relatively large for a given change in x. This can be achieved by using fine pitch surface electrodes. A perspective view of a variable capacitance sensor 30 having an array of fine pitch surface electrodes 32, 34 is shown in FIG. 3. To increase delta A relative to displacement x of the proof mass, the width w of the electrodes is effectively increased by adding sets of electrode plates to the fixed substrate 36 and the proof mass 38, respectively, as shown in FIG. 3. These electrodes are electrically connected in parallel, so that the group of fixed electrodes 32 acts as a single electrode, and the group of moveable electrodes 34 act together as a single electrode. The sensor configuration shown in FIG. 3 has triple the electrode width w that it would have with only one set of electrodes, and thus has a delta A that is approximately three times as great for a given displacement x.

While three sets of electrodes are shown in FIG. 3, almost any number of electrodes can be used under this approach. Additional plates can be added to cover the area of the proof mass, and these can be oriented in different directions to detect motion in multiple axes, as discussed in more detail below. With reference to FIG. 4, shown is an embodiment of a sensor 100 that includes three layers, or wafers. In particular, the sensor 100 includes an electronics wafer 103, a proof mass wafer 106, and a cap wafer 109. CMOS electronics 113 can be included within the electronics wafer 100, and can be electrically coupled to various electrical components in the proof mass wafer 106 and the cap wafer 109. Also, the CMOS electronics 113 can provide output ports for coupling to electronic components external to the sensor 100 as can be appreciated. In some cases, heat generated in the CMOS electronics 113 may be unacceptable, in which case the CMOS electronics can be located in a separate but proximal electronics die, *etc.*

The proof mass wafer 106 includes the support 116 that is mechanically coupled to a proof mass 119. Although the cross-sectional view of the sensor 100 is shown, according to one embodiment, the support 116 as a portion of the proof mass wafer 106 surrounds the proof mass 119. Consequently, in one embodiment, the electronics wafer 103, the support 116, and the cap wafer 109 form a pocket within which the proof mass 119 is suspended.

Together, the electronics wafer 103, the support 116, and the cap wafer 109 provide a support structure to which the proof mass 119 is attached via a compliant coupling according to various embodiments of the present invention. In this respect, the compliant coupling may comprise high aspect ratio flexural suspension elements 123, as are known to those of skill in the art.

The sensor 100 further includes a first electrode array 126 that is disposed on the proof mass 119. In one embodiment, the first electrode array 126 is located on a surface of the proof mass 119 that is opposite the upper surface of the electronics wafer 103. The surface of the proof mass 119 upon which the first electrode array 126 is disposed is a substantially flat surface as can be appreciated.

A second electrode array 129 is disposed on a surface on the electronics wafer 103 facing opposite the first electrode array 126 disposed on the proof mass 119. Due to the manner in which the proof mass 126 is suspended over the electronics wafer 103, a substantially uniform gap 133 is formed between the first electrode array 126 and the second electrode array 129. The size of the gap 133 is denoted by distance d. The distance d may comprise, for example, anywhere from 1 to 3 micrometers, or it may be any other distance as is deemed appropriate.

The proof mass 119 is suspended above the electronics wafer 103 in such a manner that the first electrode array 126 and the second electrode array 129 substantially fall into planes that are parallel to each other, such that the gap 133 is substantially uniform throughout the entire overlap between the first and second electrode arrays 126 and 129. Alternatively, the electrode arrays 126, 129 may be placed on other surfaces or structures on the electronics wafer 103 or the proof mass 119, as may be deemed appropriate. Electrodes may also be placed on other portions of the proof mass and the bonded wafer structure, in addition to the first and second electrode arrays. For example, third and fourth electrode arrays 150 and 152 can be positioned on a top surface of the proof mass and an opposing surface of the top wafer 109, as shown in FIG. 4. Other configurations can also be used.

The high aspect ratio flexural suspension elements 123 offer a degree of compliance that allows the proof mass 119 to move relative to the support structure of the sensor 100. Due to the design of the flexural suspension elements 123, the displacement of the proof mass 119 from a rest position is substantially restricted to a direction that is substantially parallel to the second electrode array 129, which is disposed on the upper surface of the electronics wafer 103. The flexural suspension elements 123 are configured to allow for a predefined amount of movement of the proof mass 119 in a direction parallel to the second electrode array 129 such that the gap 133 remains substantially uniform throughout the entire motion to the extent possible. The design of the flexural suspension elements 123 provides for a minimum amount of motion of the proof mass 119 in a direction orthogonal to the second electrode array 129, while allowing a desired amount of motion in the direction parallel to the second electrode array 129.

Next, a brief discussion on the operation of the sensor 100 in sensing acceleration, for example is provided. In particular, the sensor 100 is affixed to a structure or vehicle that experiences acceleration that one wishes to quantify. The sensor 100 is affixed to the structure or device such that the direction of the acceleration is in line with the direction of the permitted movement of the proof mass 119 as provided by the flexural suspension elements 123 as discussed above. Once the structure or vehicle experiences acceleration, the proof mass 119 will move as described above. Due to the fact that the first electrode array 126 and the second electrode array 129 are disposed on the proof mass 119 and the electronics wafer 103, then one or more capacitances between the first and second electrode arrays 126 and 129 will vary with the shifting of the arrays with respect to each other.

The CMOS electronics 113 and/or external electronics may be employed to detect or sense the degree of the change in the capacitances between the electrode arrays 126 and 129. Based upon the change in the capacitances, such circuitry can generate appropriate signals that are proportional to the acceleration experienced by the sensor 100. Alternatively, a closed loop circuit may be employed to maintain the proof mass 119 at a predefined location during acceleration. Such a circuit comprises a closed loop that applies actuation signals to cause the proof mass 119 to stay at the predefined location based upon position feedback from the first and second electrode arrays 126 and 129.

While motion of the proof mass 119 is substantially restricted within a plane that is substantially parallel to the second electrode array 129, given that the flexural suspension elements 123 are compliant in nature, then it is possible that the proof mass 119 might experience displacement relative to the second electrode array 129 in a direction orthogonal to the second electrode array 129. Stated another way, unwanted movement of the proof mass 119 may occur resulting in an undesirable change in the gap 133. According to various embodiments of the present invention, normalization may be employed to cancel out any changes in the desired cross-capacitances between the first and second electrode arrays 126 and 129 due to a change in the gap 133 as will be described.

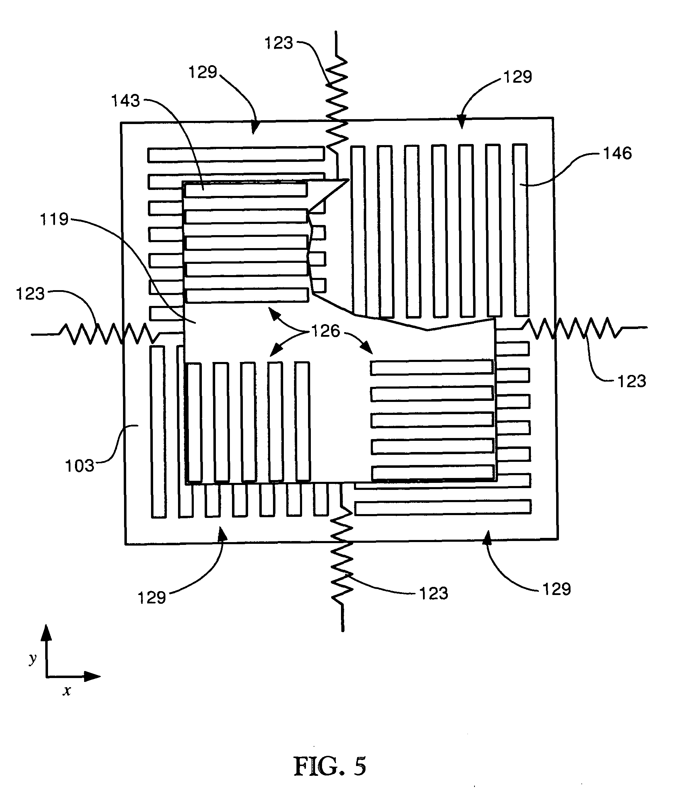

With reference to FIG. 5, shown are views of the respective first and second electrode arrays 126 and 129 according to an embodiment of the present invention. As shown, there are actually multiple first electrode arrays 126 and multiple second electrode arrays 129. For example, in the configuration shown, there may be four pairs of first and second electrode arrays 126 and 129. Given that the first and second electrode arrays 126 and 129 are oriented as shown in FIG. 5, the movement of the proof mass 119 in two dimensions within a plane that is parallel to the second electrode array 129 may be sensed. Accordingly, in one embodiment, the flexural suspension elements 123 are configured to allow movement of the proof mass 119 in two dimensions. Alternatively, the flexural suspension elements may be configured to allow movement in a single dimension, where the first and second electrode arrays 126 and 129 are situated in a single orientation to sense such a single dimensional movement.

Each individual electrode array comprises a plurality of electrodes. In particular, the first electrode arrays 126 are each made up of a plurality of first electrodes 143 and the second electrode arrays 129 are made up of a plurality of second electrodes 146. For each of the first electrode arrays 126, there is a corresponding second electrode array 129. Each of the first electrode arrays 126 is smaller in size than the corresponding second electrode array 129 to account for the fact that the first electrode arrays 126 are moveable. Consequently, even though the first electrode arrays 126 move relative to the respective second electrode arrays 129, there is always substantially similar overlap between the respective pairs of first and second electrode arrays throughout the entire range of motion of the proof mass 119.

Each of the first and second electrodes 143 and 146 comprise rectangular conductors that are disposed adjacent to each other. The distance between a common point in each of the electrodes 143 and 146 for a respective electrode array is called the "pitch" of the electrode array. Although the electrodes 143 and 146 are shown as rectangular conductors, it is understood that conductors of other shapes and sizes may be employed as desired in accordance with the principles described herein. Additionally, the electrodes may be disposed in configurations other than in rectangular arrays as depicted. For example, the electrodes may be disposed in a circular array for use in detecting angular acceleration and displacement.

It will be apparent that for the sensor configurations shown in FIGs. 3-5, in order to obtain an absolute capacitance value that directly indicates displacement, the limits of travel of the proof mass will be restricted so that the plates maintain some overlap at all times, and also never overlap completely. This factor tends to limit the dynamic range of the device. Alternatively, if the dynamic range of the device is larger than the electrode pitch (i.e. the proof mass can travel beyond one pitch of the electrodes), this will result in a cyclic output. That is, the capacitance signal will rise and fall as the proof mass displaces, with the proof mass electrodes passing over and then past a first fixed electrode, then over and past a second fixed electrode, and so on. When the travel limit rule is broken, the capacitance will no longer be a straight line over the range of motion, but it will be cyclic and appear sinusoidal. It has been found that performance (i.e. sensitivity) is improved by going to a cyclic electrode configuration. However, the system has no mechanism to know the absolute position of the proof mass. Specialized electronics have been used in systems with cyclic sensors to track the absolute position by counting the number of cycles of displacement of the electrodes, but this adds complexity and cost to such systems.

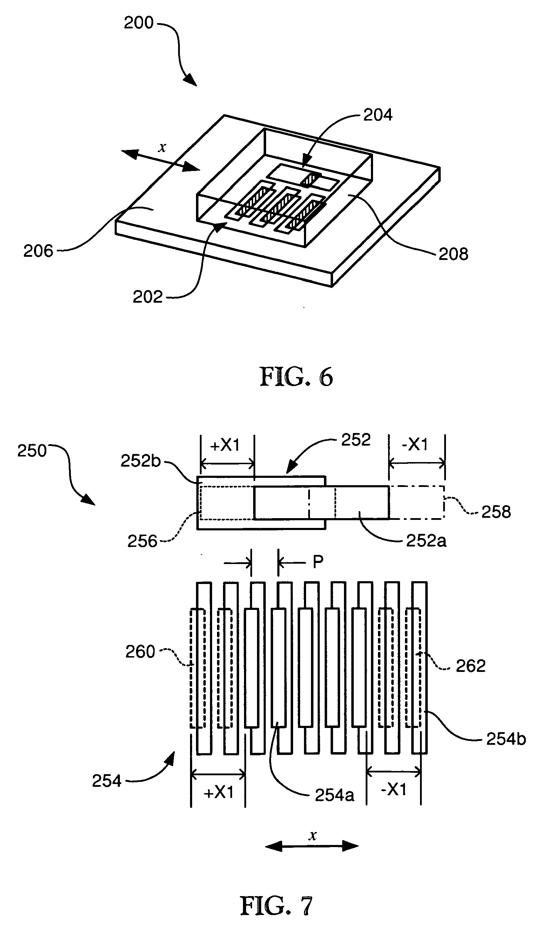

Advantageously, the inventors have developed a capacitive inertial sensor configuration with two independent sets of electrodes for measuring motion in the same axis. One embodiment of such a sensor is shown in FIG. 6. This sensor 200 includes a first set of fine pitch cyclic electrodes 202 that are connected in parallel (as discussed above with respect to FIG. 3) and a second set of electrodes 204 that are positioned adjacent to the cyclic set and have a larger pitch, creating a lower performance absolute sensor. Each set of electrodes includes at least one electrode on the fixed substrate 206, and at least one corresponding electrode on the proof mass 208. The proof mass electrodes can be on the same proof mass, or they can be on connected pieces of the same mass moving in the same direction.

Because the absolute sensor pair 204 does not break the overlap rule over the whole range of travel, the second electrode set provides an indication of the absolute position of the proof mass 206. Though the second set does not have the level of resolution of the cyclic electrode set, the absolute sensor does have enough resolution to indicate which period the cyclic sensor is on. The combination of the two sensors thus enables a high performance, large dynamic range inertial sensor.

The size, shape and number of electrodes in both the first and second electrode sets 202, 204 can vary, and the number of electrodes on the proof mass 208 can differ from the number of electrodes on the fixed substrate 206. In the configuration shown in FIG. 6, the cyclic electrode set 202 includes three electrode pairs, and the large pitch electrode set 204 includes just one electrode pair. Another embodiment of a sensor 250 is shown in plan view in FIG. 7, in which the large pitch electrode set 252 includes one pair of electrodes, and the cyclic set 254 includes five electrodes 254a on the proof mass and nine electrodes 254b on the fixed substrate.

FIG. 7 also illustrates part of the range of motion of the proof mass electrodes relative to the fixed electrodes. The absolute sensor set 252 is configured so that at least some portion of the proof mass electrode 252a overlaps the corresponding fixed electrode 252b at all times. This allows this electrode set to provide an absolute displacement indication. At one maximum limit of travel of the absolute electrode set from the home position, shown in dashed lines at 256 and indicated by the displacement dimension +X1, the proof mass electrode 252a does not completely overlap the corresponding fixed electrode 252b. Since both the absolute and cyclic electrodes 252a and 254a are attached to the same proof mass, the displacement for each will be the same. Thus, the cyclic electrodes 254a will also displace by the same dimension +X1 when the absolute electrode 252a do so, as indicated by dashed lines 260. At the other limit of travel from the home position corresponding to a displacement of dimension -X1 (i.e. in the opposite direction than +X1), shown in dashed lines at 258, the proof mass electrode still overlaps the fixed electrode by some amount. Once again, the cyclic electrodes will displace in the same direction by the same amount (-X1), as indicated by dashed lines at 262.

It is also desirable that the cyclic electrode sets follow a similar rule, with the total range of motion of the proof mass never placing any proof mass electrode(s) totally beyond the range of the set of fixed electrodes. Viewing FIG. 7, if one of the five proof mass cyclic electrodes 254a were to travel beyond overlapping with any of the corresponding fixed electrodes 254b, the magnitude of the sine wave peak would be decreased due to the loss of one electrode. This would alter the capacitance signal, and could thus alter the displacement measurement. Alternatively, the system can be configured to allow one or more of the proof mass electrodes to pass completely beyond the range of the fixed electrodes. In such a case, the system can be programmed to compensate for the resulting capacitance change based upon the absolute sensor reading. It is believed that this sort of approach would probably degrade sensitivity in proportion to the current number of overlapped electrodes divided by the original total number of overlapped electrodes.

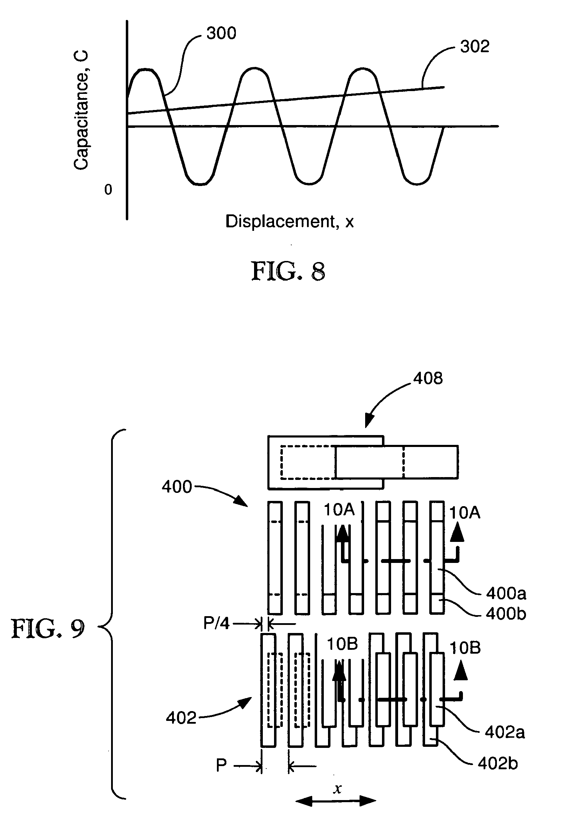

The comparative output from the absolute and cyclic sensors sets is illustrated in the graph of FIG. 8. In this figure, the capacitance signal, represented by the curve 300 produced by the cyclic sensor set, is a sine wave, with the capacitance rising and falling as the cyclic electrodes on the proof mass pass over one and then another of the fixed cyclic electrodes, and also pass over the space between the fixed electrodes. The inventors have found that a good sinusoidal response from the cyclic sensor set is obtained when the ratio of the pitch, P, of the cyclic electrode array (shown in FIG. 7) divided by the gap d (shown in FIG. 1) between the fixed and moving electrode arrays is approximately equal to 1.6 (i.e., $P/d \approx 1.6$). As P/d increases above 1.6, harmonic content will increase as the capacitance variation more closely approximates a triangular wave. Nevertheless, this additional harmonic content can be easily managed. In general, a smaller dimension for the gap d provides better sensor performance. The minimum gap d can be limited by gap control (how small a non-interfering gap can be reliably be produced) and lithographic line width limits on P. As P/d decreases below 1.6, sensor performance is degraded as a result of a smaller change in capacitance per unit of linear displacement. For the cyclic sensor, P can be selected based on the minimum manufacturable gap d, unless lithographically limited.

While the capacitance signal produced by the cyclic sensor set is a sine wave, the absolute electrode set produces a substantially linear capacitance signal, represented by the substantially linear curve 302, over the entire range of motion. The cyclic sensor set produces a higher accuracy signal because the change in capacitor overlap area A per unit of linear displacement x of the proof mass is larger, thus providing a high accuracy relative positional signal. The absolute electrode set, on the other hand provides an indication of the absolute position on the cyclic capacitance curve to allow proper interpretation of the cyclic electrode signal, though with less accuracy because the change in A per unit change in x is smaller.

It will be apparent from viewing FIG. 8 that the sensitivity (slope of the capacitance curve) of the cyclic sensor array is not constant. One approach for dealing with this is shown in Fig. 9. A second cyclic electrode array, 402, is added in which the fixed electrode array, 402b, is shifted by Pitch/4 relative to the first fixed cyclic array, 400b, in the direction of sensor motion. The two moving arrays, 400a and 402a should be phase-aligned with each other in the motion direction on the surface of the proof mass, 404. A cross-sectional view in Fig. 10 illustrates the requisite alignment between the two electrode arrays.

The multiple cyclic electrode configuration shown in Figs. 9 and 10 produces a set of capacitance curves like that shown in FIG. 11. The first cyclic electrode set produces the cyclic capacitance curve shown in the solid line 420 in FIG. 11. The second cyclic electrode set produces the cyclic capacitance curve shown by the dashed line 422 in FIG. 11. The absolute electrode set (408 in FIG. 9) produces the substantially linear curve 424 shown in a solid line. The cyclic curves 420 and 422 are rotationally shifted relative to one another by $\pi/2$ radians (or 90°) corresponding to a sine-cosine relationship. Such a pair of signals is routinely combined to produce a position output signal with a uniform sensitivity equivalent to the maximum sensitivity of one signal alone. Examples of such interpolation circuits are commonplace for sine-cosine incremental optical encoders. Such circuits can maintain relative cycle and sub-cycle counts. However, for absolute positional accuracy, an initial cycle count must be supplied. Advantageously, in the sensor disclosed herein, the sensor signal produced by the absolute sensor, signal 424 of Fig. 11, can provide the required absolute cycle count. In addition, with prior configurations, sample rates for interpolation electronics must be fast enough to insure that a full cycle of displacement cannot occur between measurement samples. With the present invention, on the other hand, this requirement is relaxed for sensor electronics which combine the three signals, 420, 422 and 424.

The two sensor sets can also be used individually in a number of self test and calibration tasks. For example, the capacitor plates can be biased to create an in-plane force to move the proof mass. This can allow users to actuate one set of electrodes, and measure the response on the other. Combining these measurements with tilting the device up and measuring the response to gravity, the alignment, gap and other parameters of the sensor can be determined. Other self-test and calibration tasks can also be performed.

It is to be understood that while the embodiment shown and described with respect to FIGs. 9-11 depicts two cyclic electrode sets that are offset by 90°, more than two cyclic electrode sets can be provided for a given axis of motion, and these can be offset by different amounts. For example, three cyclic electrode sets can be provided, and these can be offset by 60 ° from each other.

The use of multiple electrode sets for one axis of motion can be extended to multiple axes, and these can use the same proof mass or chip. One embodiment of a capacitive sensor 500 with multiple electrode sets per axis for detecting motion in 2 orthogonal axes (X and Y) is shown in FIG. 12. In this embodiment a first absolute electrode set 502 and first cyclic electrode set 504 are provided for detecting motion of the proof mass in the x direction. A second absolute electrode set 506 and second cyclic electrode set 508 are also provided, and these are oriented perpendicular to the first electrode sets, to detect motion of the proof mass in the y direction.

In the embodiment of FIG. 12 the fixed electrodes for all electrode sets, both cyclic and absolute, have a width w that is selected so that no electrode pairs will experience lateral displacement that changes the respective capacitance reading. For example, the first cyclic electrode set 504, which detects displacement along the x axis, has fixed electrodes 510 that are wide enough so that displacement of the corresponding proof mass electrodes 512 in the y direction will not cause an end of one of the corresponding proof mass electrodes to extend past the end of the fixed electrode, thereby changing the overlap. This way, a displacement in the y direction will not affect the reading of displacement in the x direction, and vice versa.

In addition to its application as an accelerometer, this type of system can also be applied to other uses of the cyclic capacitor plates for sensing. For example, this type of capacitive sensor can be used to detect motion of the sense axis in a gyroscope. This type of device can also be used for micro-positioning devices for electron microscopy.

The system disclosed herein thus provides a mems-type inertial sensor having two sets of capacitor electrodes measuring displacement in the same direction with substantially different sensitivity. One electrode set is a higher accuracy cyclic electrode set, and the other is a lower accuracy absolute sensor. The cyclic electrode set provides a high accuracy relative positional signal, while the absolute electrode set provides an indication of the absolute position on the cyclic capacitance curve to allow proper interpretation of the cyclic electrode signal. Sensors of this type can be configured to detect displacement throughout a wide range. For example, the inventors have designed sensors of this type that can measure displacements up to about $50\mu$ m ($50 \times 10^{-6}$ m) with a resolution that is less than 1 pm ($1 \times 10^{-12}$ m). Multiple cyclic and absolute electrode sets can be provided, and these can be configured to sense displacement in multiple axes. Having two electrode sets in the same axis enables a high performance inertial sensor with a large dynamic range. It also enables closed loop operation of a cyclic sensor, if desired.

This type of capacitive sensor system can be fabricated using MEMS fabrication methods that are known in the art. The surface electrode configuration can be made in a wafer bonding process, in which the electrodes are fabricated on the surface of two wafers and then bonded together, face to face. One wafer is then etched (either before or after bonding) to define the moving structure. This device could also be made using a surface micromachining process.

The cyclic electrode combined with an absolute sensor also allows fabrication tolerances for wafer alignment to be relaxed. That is, the home position can be determined by the absolute sensor, while the cyclic sensor maintains full performance independent of absolute position. This can enable a potentially cheaper manufacturing process. For example, fabricating a capacitive sensor of this type typically requires good alignment during manufacturing, and can be hard to obtain consistently. Advantageously, the cyclic electrode system disclosed herein tolerates a greater degree of misalignment so long as the moving parts do not move off the fixed electrodes at the limit of travel. Using two sets of offset electrodes and an absolute sensor (as depicted in FIG. 9), this system can provide resolution that is substantially constant over the entire range of travel. In this configuration the home position becomes irrelevant - there is no best relative position of the electrodes. This configuration can thus tolerate larger misalignment during manufacturing without adversely affecting the operation of the sensor.

It is to be understood that the above-referenced arrangements are illustrative of the application of the principles disclosed herein. It will be apparent to those of ordinary skill in the art that numerous modifications can be made without departing from the principles and concepts of this disclosure, as set forth in the claims.

## Claims

1. A sensor (200), comprising:

   first and second variable capacitor electrode sets (204, 202), respectively disposed upon a planar support surface (206) and a proof mass (208) that is compliantly displaceable along a first axis substantially parallel to the planar support surface;
   the first electrode set (204) producing an absolute capacitance variation over a range of displacement of the proof mass (208) along the first axis; and
   the second electrode set (202) producing a cyclic capacitance variation throughout the range of displacement along the first axis.

2. A sensor in accordance with claim 1, wherein the second electrode set (202) comprises at least two pairs of elongate electrodes (254) oriented perpendicular to the first axis and having an electrode pitch (P), the range of displacement being greater than the pitch.

3. A sensor in accordance with claim 1, wherein the first electrode set (204) comprises one pair of electrodes (252) including a stationary electrode (252b) and a proof mass electrode (252a), the proof mass electrode being oriented to always partially overlap the stationary electrode throughout the range of displacement.

4. A sensor in accordance with claim 1, further comprising a third variable capacitor electrode set (402), disposed upon the support surface (206) and the proof mass (208), respectively, producing a cyclic capacitance variation over a range of displacement of the proof mass along the first axis.

5. A sensor in accordance with claim 4, wherein the second and third variable capacitor electrode sets (202, 402) have electrodes that are positionally offset from each other.

6. A sensor in accordance with claim 5, wherein the second and third variable capacitor electrode sets (202, 402) have electrodes that are positioned to produce output signals (420, 422) that are offset by about 90° from each other.

7. A sensor in accordance with claim 1, further comprising:

   third and fourth variable capacitor electrode sets (508, 506), disposed upon the support surface (206) and the proof mass (208), respectively, the proof mass being compliantly displaceable along a second axis that is substantially orthogonal to the first axis and parallel to the support surface;

the third electrode set (508) producing a cyclic variation in capacitance over a range of displacement of the proof mass along the second axis; and

the fourth electrode set (506) producing an absolute capacitance variation throughout the range of displacement along the second axis.

8. A sensor in accordance with claim 7, wherein the electrode sets each include static electrodes, attached to the support surface (202), having widths selected to substantially prevent a change in capacitance due to displacement within the range of displacement along an axis that is orthogonal to the respective sensing axis.

9. A sensor in accordance with claim 7, wherein the second and third variable capacitor electrode sets (202, 508) comprise subsets of electrodes that are positionally offset from each other a distance sufficient to produce capacitance signals that are rotationally offset from each other by about 90°.

10. A method for sensing with a sensor in accordance with claim 1, comprising the steps of:

displacing the proof mass (208) along the first axis;
obtaining a first cyclic capacitance value from the first variable capacitor array (202);
obtaining a second absolute capacitance value from the second variable capacitor array (204); and
determining a magnitude of the displacement based upon the first and second capacitance values.

**Patentansprüche**

1. Sensor (200), umfassend:

erste und zweite variable Kondensatorelektrodensätze (204, 202), die auf einer ebenen Stützfläche (206) beziehungsweise einer Prüfmasse (208) angeordnet sind, die entlang einer ersten Achse, die im Wesentlichen parallel zur ebenen Stützfläche ist, flexibel verschiebbar ist;
wobei der erste Elektrodensatz (204) eine absolute Kapazitätsschwankung in einem Bereich der Verschiebung der Prüfmasse (208) entlang der ersten Achse erzeugt; und
wobei der zweite Elektrodensatz (202) eine zyklische Kapazitätsschwankung im gesamten Bereich der Verschiebung entlang der ersten Achse erzeugt.

2. Sensor nach Anspruch 1, wobei der zweite Elektrodensatz (202) mindestens zwei Paar verlängerte Elektroden (254) umfasst, die senkrecht zur ersten Achse ausgerichtet sind und einen Elektrodenabstand (P) aufweisen, wobei der Bereich der Verschiebung größer als der Abstand ist.

3. Sensor nach Anspruch 1, wobei der erste Elektrodensatz (204) ein Paar Elektroden (252) umfasst, die eine stationäre Elektrode (252b) und eine Prüfmassenelektrode (252a) umfassen, wobei die Prüfmassenelektrode ausgerichtet ist, um immer teilweise die stationäre Elektrode im gesamten Bereich der Verschiebung zu überlappen.

4. Sensor nach Anspruch 1, weiter umfassend einen dritten variablen Kondensatorelektrodensatz (402), der auf der Stützfläche (206) beziehungsweise der Prüfmasse (208) angeordnet ist, der eine zyklische Kapazitätsschwankung in einem Bereich der Verschiebung der Prüfmasse entlang der ersten Achse erzeugt.

5. Sensor nach Anspruch 4, wobei der zweite und der dritte variable Kondensatorelektrodensatz (202, 402) Elektroden aufweisen, die in Bezug auf ihre Position zueinander versetzt sind.

6. Sensor nach Anspruch 5, wobei der zweite und der dritte variable Kondensatorelektrodensatz (202, 402) Elektroden aufweisen, die positioniert sind, um Ausgabesignale (420, 422) zu erzeugen, die um 90° zueinander versetzt sind.

7. Sensor nach Anspruch 1, weiter umfassend:

dritte und vierte variable Kondensatorelektrodensätze (508, 506), die auf der Stützfläche (206) beziehungsweise der Prüfmasse (208) angeordnet sind, wobei die Prüfmasse entlang einer zweiten Achse flexible verschiebbar ist, die im Wesentlichen orthogonal zur ersten Achse und parallel zur Stützfläche ist;
wobei der dritte Elektrodensatz (508) eine zyklische Schwankung der Kapazität in einem Bereich der Verschiebung der Prüfmasse entlang der zweiten Achse erzeugt; und

wobei der vierte Elektrodensatz (506) eine absolute Kapazitätsschwankung im gesamten Bereich der Verschiebung entlang der zweiten Achse erzeugt.

**8.** Sensor nach Anspruch 7, wobei die Elektrodensätze jeweils statische Elektroden umfassen, die auf der Stützfläche (202) befestigt sind, die Breiten aufweisen, die ausgewählt sind, um im Wesentlichen eine Änderung der Kapazität aufgrund der Verschiebung innerhalb des Bereichs der Verschiebung entlang einer Achse zu verhindern, die orthogonal in Bezug auf die jeweilige Messachse ist.

**9.** Sensor nach Anspruch 7, wobei der zweite und der dritte variable Kondensatorelektrodensatz (202, 508) Teilsätze von Elektroden aufweisen, die in Bezug auf ihre Position zueinander um einen Abstand versetzt sind, der ausreichend ist, um Kapazitätssignale zu erzeugen, die um ungefähr 90° zueinander drehversetzt sind,

**10.** Verfahren zur Messung mit einem Sensor nach Anspruch 1, umfassend die folgenden Schritte:

Verschieben der Prüfmasse (208) entlang der ersten Achse;
Erhalten eines ersten zyklischen Kapazitätswerts aus der ersten variablen Kondensatoranordnung (202);
Erhalten eines zweiten absoluten Kapazitätswerts aus der zweiten variablen Kondensatoranordnung (204); und
Bestimmen einer Größe der Verschiebung, basierend auf dem ersten und dem zweiten Kapazitätswert.

**Revendications**

**1.** Capteur (200), comprenant :

- des premier et deuxième ensembles d'électrodes de condensateurs variables (204, 202), disposés respectivement sur une surface de support plane (206) et une masse d'épreuve (208) qui est déplaçable de manière flexible le long d'un premier axe sensiblement parallèle à la surface de support plane ;
- le premier ensemble d'électrodes (204) produisant une variation de capacité absolue sur une plage de déplacement de la masse d'épreuve (208) le long du premier axe ; et
- le deuxième ensemble d'électrodes (202) produisant une variation de capacité cyclique à travers la plage de déplacement le long du premier axe.

**2.** Capteur selon la revendication 1, dans lequel le deuxième ensemble d'électrodes (202) comprend au moins deux paires d'électrodes allongées (254) orientées perpendiculairement au premier axe et ayant un pas d'électrode (P), la plage de déplacement étant supérieure au pas.

**3.** Capteur selon la revendication 1, dans lequel le premier ensemble d'électrodes (204) comprend une paire d'électrodes (252) comprenant une électrode stationnaire (252b) et une électrode de masse d'épreuve (252a), l'électrode de masse d'épreuve étant orientée pour toujours recouvrir partiellement l'électrode stationnaire à travers la plage de déplacement.

**4.** Capteur selon la revendication 1, comprenant en outre un troisième ensemble d'électrodes de condensateurs variables (402), disposés sur la surface de support (206) et la masse d'épreuve (208), respectivement, produisant une variation de capacité cyclique sur une plage de déplacement de la masse d'épreuve le long du premier axe.

**5.** Capteur selon la revendication 4, dans lequel les deuxième et troisième ensembles d'électrodes de condensateurs variables (202, 402) ont des électrodes qui sont décalées en position les unes des autres.

**6.** Capteur selon la revendication 5, dans lequel les deuxième et troisième ensembles d'électrodes de condensateurs variables (202, 402) ont des électrodes qui sont positionnées pour produire des signaux de sortie (420, 422) qui sont décalés d'environ 90° les uns des autres.

**7.** Capteur selon la revendication 1, comprenant en outre :

- des troisième et quatrième ensembles d'électrodes de condensateurs variables (508, 506), disposés sur la surface de support (206) et la masse d'épreuve (208), respectivement, la masse d'épreuve étant déplaçable de manière flexible le long d'un second axe qui est sensiblement orthogonal au premier axe et parallèle à la surface de support ;

- le troisième ensemble d'électrodes (508) produisant une variation cyclique en capacité sur une plage de déplacement de la masse d'épreuve le long du second axe ; et
- le quatrième ensemble d'électrodes (506) produisant une variation de capacité absolue à travers la plage de déplacement le long du second axe.

8. Capteur selon la revendication 7, dans lequel les ensembles d'électrodes comprennent chacun des électrodes statiques, attachées à la surface de support (202), ayant des largeurs choisies pour empêcher sensiblement un changement en capacité dû à un déplacement à l'intérieur de la plage de déplacement le long d'un axe qui est orthogonal à l'axe de détection respectif.

9. Capteur selon la revendication 7, dans lequel les deuxième et troisième ensembles d'électrodes de condensateurs variables (202, 508) comprennent des sous-ensembles d'électrodes qui sont décalés en position les uns des autres d'une distance suffisante pour produire des signaux de capacité qui sont décalés en rotation les uns des autres d'environ 90°.

10. Procédé de détection avec un capteur selon la revendication 1, comprenant les étapes de :

- déplacer la masse d'épreuve (208) le long du premier axe ;
- obtenir une première valeur de capacité cyclique à partir du premier réseau de condensateurs variables (202) ;
- obtenir une seconde valeur de capacité absolue à partir du deuxième réseau de condensateurs variables (204) ; et
- déterminer une grandeur du déplacement sur la base des première et seconde valeurs de capacité.

FIG. 1

FIG. 2

FIG. 3

FIG. 4

FIG. 5

200

x

204

206

202

208

## FIG. 6

250

252b

252

+X1

-X1

256

258

252a

P

260

262

254b

254

+X1

254a

-X1

x

## FIG. 7

**FIG. 8**

**FIG. 9**

FIG. 10A

FIG. 10B

FIG. 11

FIG. 12

**EP 2 257 821 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6041653 A
- US 5534859 A

- US 5304937 A